# FASCICULE DE BREVET EUROPEEN

(11) **EP 4 302 149 B1**
(45) Date de publication et mention de la délivrance du brevet: **28.01.2026**
(21) Numéro de dépôt: 22713434.3
(22) Date de dépôt: 03.03.2022
(51) Int. Cl.: G02B 26/06, G02B 26/08, G02B 27/62

(54) **DISPOSITIF D'OPTIQUE ADAPTATIVE AMELIORE ET PROCEDE DE FABRICATION AFFERENT**
VERBESSERTE ADAPTIVE OPTISCHE VORRICHTUNG UND ZUGEHÖRIGES HERSTELLUNGSVERFAHREN
IMPROVED ADAPTIVE OPTICAL DEVICE AND ASSOCIATED MANUFACTURING PROCESS

(30) Priorité: 03.03.2021 FR 2102081
(43) Date de publication de la demande: 10.01.2024
(73) Titulaire: ALPAO, 38330 Montbonnot-Saint-Martin (FR)
(72) Inventeur: LASLANDES, Marie Emilie, 38610 GIERES (FR); STEFANUTO, Damien, 38420 LE VERSOUD (FR)
(74) Mandataire: Hautier IP
(86) Numéro de dépôt international: PCT/FR2022/050382
(87) Numéro de publication internationale: WO 2022/185013

(56) Documents cités:
- EP-A1- 3 203 299
- US-A- 4 655 563
- US-B1- 6 236 490
- "Astronomical Optics and Elasticity Theory", 1 January 2009, SPRINGER BERLIN HEIDELBERG, Berlin, Heidelberg, ISBN: 978-3-540-68905-8, ISSN: 0941-7834, article LEMAITRE GÉRARD RENÉ: "Active Optics with Multimode Deformable Mirrors (MDM) Vase and Meniscus Forms", pages: 365 - 411, XP055872148, DOI: 10.1007/978-3-540-68905-8_7

## Description

### DOMAINE TECHNIQUE

La présente invention concerne le domaine technique général de l'optique adaptative, et est plus particulièrement relative à la déformation contrôlée de front d'onde incident pour des applications variées comme l'astronomie, l'optique, la médecine, notamment l'ophtalmologie, les télécommunications, par exemple au moyen d'optique sans fil, l'utilisation de lasers, la microscopie, les fibres optiques, la microélectronique, cette liste n'étant aucunement limitative.

L'invention concerne plus précisément un dispositif d'optique adaptative comprenant au moins :
- une plaque primaire déformable, laquelle présente une surface optique destinée à déformer un front d'onde incident par réfraction et/ou réflexion,
- une pluralité d'actionneurs primaires, conçus pour appliquer chacun une force respective sur ladite plaque primaire déformable afin de déformer ladite surface optique,
- et un bâti fixe par rapport à ladite plaque primaire déformable.

La présente invention concerne également un procédé de fabrication d'un tel dispositif d'optique adaptative.

### TECHNIQUE ANTERIEURE

Il est connu d'employer des dispositifs optiques actifs, c'est-à-dire adaptatifs, par exemple des miroirs déformables permettant de générer ou de corriger de manière contrôlée des aberrations optiques, telles que l'astigmatisme, dans un front d'onde incident. Les miroirs déformables conventionnels connus comprennent généralement une plaque déformable présentant d'un côté une face réfléchissante, destinée à réfléchir le front d'onde incident, et de l'autre côté une face cachée, opposée à la face réfléchissante. Ces miroirs connus comprennent en outre plusieurs actionneurs exerçant des forces ponctuelles sur la face cachée, chaque actionneur déformant ainsi localement la courbure de la face réfléchissante, de manière contrôlée.

Ces miroirs déformables connus, s'ils donnent globalement satisfaction, n'en présentent pas moins des limites selon les utilisations désirées, et pourraient donc encore être améliorées.

En effet, il est dans certains cas souhaité de modifier la courbure de la plaque déformable, et plus précisément de sa face réfléchissante, sur une partie voire sur la totalité de cette dernière, afin notamment d'augmenter le rayon de courbure, de générer au contraire une planéité ou d'améliorer celle-ci, éventuellement d'inverser le sens de courbure, ou encore de modifier la nature de la courbure, par exemple afin d'obtenir un système optique hors axe. Pour modifier la courbure générale de la face réfléchissante ou d'une partie substantielle de cette dernière, il est nécessaire, avec les miroirs connus, de réaliser un réglage de plusieurs des actionneurs, voire de la totalité d'entre eux. Or, ce réglage est particulièrement complexe et augmente le risque d'erreur individuelle d'un actionneur ou même de plusieurs (erreur humaine, erreur machine, panne, etc.), ce qui risque de fausser la réflexion voulue du front d'onde sur le miroir. De plus, ce réglage est également long à réaliser, du fait que plusieurs voire la totalité des actionneurs exerçant une force sur la face cachée sont impliqués, et qu'il est donc essentiel de calculer et tester précisément le déplacement de chacun d'entre eux. De plus, la modification de la courbure de la face réfléchissante des miroirs connus est généralement limitée du fait de la course des actionneurs, qui est généralement réduite en raison de la précision demandée à ces derniers. Par ailleurs, même quand les actionneurs arrivent effectivement à impartir à la plaque déformable une courbure globale désirée, la course d'un certain nombre de ces actionneurs est nécessairement restreinte tant que la plaque déformable conserve cette courbure, et les déformations locales sont donc à la fois moins précises (la précision diminuant proportionnellement à l'amplitude de course utilisée), mais également moins variées (du fait même de la limitation de ladite course).

Ces différentes exigences et contraintes limitent drastiquement la variété possible de modes de déformation, diminuent de fait la précision de réglage, entraînent une inertie (ou un temps de réaction) à la déformation importante et un montage et un réglage particulièrement difficiles de ces miroirs connus. De plus, les inconvénients mentionnés ci-avant renchérissent le coût de ces miroirs déformables connus qui ne peuvent généralement être utilisé qu'à partir de leur forme globalement plane, au repos, sans contrainte exercée, mais également sans correction possible en cas d'erreur de montage ou de fabrication autre qu'en diminuant significativement la course des actionneurs.

En définitive, pour certaines utilisations demandant des modifications particulières de courbure, les miroirs connus décrits dans ce qui précède s'avèrent être relativement peu précis, coûteux et encombrants, et ne présentent pas une fiabilité et une réactivité optimales. Les documents US 6 236 490 B1 et US 4 655 563 A décrivent un dispositif d'optique adaptative comprenant une plaque primaire déformable formant une surface optique, une pluralité d'actionneurs primaires agissant sur la plaque primaire, une plaque secondaire déformable supportant les actionneurs primaires et au moins un actionneur secondaire agissant sur la plaque secondaire, l'ensemble étant monté sur une structure de support fixe.

### EXPOSE DE L'INVENTION

Les objets assignés à l'invention visent par conséquent à remédier aux différents inconvénients susmentionnés et à proposer un nouveau dispositif d'optique adaptative fiable, permettant d'obtenir de grandes variétés de courbures de manière rapide et précise, et dont le coût de fabrication est maîtrisé.

Un autre objet assigné à l'invention vise à proposer un nouveau dispositif d'optique adaptative qui, tout en étant de construction simple, peu coûteuse et légère, permet d'obtenir de façon précise et contrôlée une grande diversité d'amplitudes de déformation.

Un autre objet assigné à l'invention vise à proposer un nouveau dispositif d'optique adaptative qui est facile et rapide à mettre en œuvre.

Un autre objet assigné à l'invention vise à proposer un nouveau dispositif d'optique adaptative robuste, compact et léger.

Un autre objet assigné à l'invention vise à proposer un nouveau dispositif d'optique adaptative de structure simple et fiable.

Un autre objet assigné à l'invention vise à proposer un nouveau dispositif d'optique qui peut être adapté au sein d'une grande variété de systèmes optiques.

Un autre objet assigné à l'invention vise à proposer un nouveau dispositif d'optique adaptative dont la conception permet une mise en place au sein d'un système optique facile, rapide et à moindre coût.

Un autre objet assigné à l'invention vise à proposer un nouveau dispositif d'optique adaptative dont la conception se prête à une grande variété d'utilisations.

Un autre objet assigné à l'invention vise à proposer un nouveau dispositif d'optique adaptative adapté pour modifier de façon particulièrement simple, fiable et maîtrisée, la courbure (planéité, concavité ou convexité) désirée de sa surface optique, en vue par exemple de déformer un front d'onde incident de façon contrôlée, précise et rapide.

Un autre objet assigné à l'invention vise à proposer un nouveau dispositif d'optique adaptative dont la mise en œuvre pour modifier la courbure de sa surface optique est particulièrement aisée, tout en étant facile et rapide à entretenir et à régler.

Par ailleurs, un autre objet assigné à l'invention vise à proposer un nouveau procédé de fabrication d'un dispositif d'optique adaptative qui est aisé, rapide et peu coûteux à mettre en œuvre, tout en permettant d'obtenir un dispositif d'optique adaptative particulièrement fiable, compact, réactif, précis et robuste.

Les objets assignés à l'invention sont atteints à l'aide d'un dispositif d'optique adaptative comprenant au moins :
- une plaque primaire déformable, laquelle présente une surface optique destinée à déformer un front d'onde incident par réfraction et/ou réflexion,
- une pluralité d'actionneurs primaires, conçus pour appliquer chacun une force respective sur ladite plaque primaire déformable afin de déformer ladite surface optique,
- un bâti fixe par rapport à ladite plaque primaire déformable, le dispositif d'optique adaptative étant caractérisé en ce qu'il comprend en outre au moins :
- une plaque secondaire déformable, qui supporte les actionneurs primaires,
- un actionneur secondaire, relié au bâti, et conçu pour exercer sur ladite plaque secondaire déformable une force selon une direction secondaire d'actionnement pour la déformer, ladite direction secondaire d'actionnement et ladite plaque secondaire étant sécantes, ladite plaque primaire déformable présentant au moins une surface périphérique s'étendant autour et/ou à côté de ladite surface optique, ledit dispositif d'optique adaptative comprenant en outre au moins un actionneur externe, qui est relié au bâti et conçu pour appliquer une force sur ladite surface périphérique afin de déformer ladite plaque primaire déformable, l'actionneur externe étant distinct de l'actionneur secondaire.

Les objets assignés à l'invention sont également atteints à l'aide d'un procédé de fabrication d'un dispositif d'optique adaptative comportant au moins :
- une étape primaire de réalisation ou de fourniture d'une plaque primaire déformable présentant une surface optique destinée à déformer un front d'onde incident par réfraction et/ou réflexion,
- une étape secondaire de réalisation ou de fourniture d'une plaque secondaire déformable,
- une étape de mise en place d'une pluralité d'actionneurs primaires, de manière à ce que, d'une part, lesdits actionneurs primaires puissent appliquer chacun une force respective sur ladite plaque primaire déformable afin de déformer ladite surface optique, et d'autre part, lesdits actionneurs primaires soient supportés par ladite plaque secondaire,
- une étape de mise en place d'au moins un actionneur secondaire pour que d'une part ledit actionneur secondaire soit relié à un bâti, lequel est fixe par rapport à ladite plaque primaire déformable, et d'autre part ledit actionneur secondaire puisse exercer sur ladite plaque secondaire déformable une force selon une direction secondaire d'actionnement pour la déformer, ladite direction secondaire d'actionnement et ladite plaque secondaire étant sécantes, ladite plaque primaire déformable présentant au moins une surface périphérique s'étendant autour et/ou à côté de ladite surface optique, le procédé comprenant en outre une étape de mise en place d'au moins un actionneur externe, de manière à ce que, d'une part, il soit relié au bâti, et que d'autre part, il puisse appliquer une force sur ladite surface périphérique afin de déformer ladite plaque primaire déformable, l'actionneur externe étant distinct de l'actionneur secondaire.

### DESCRIPTIF SOMMAIRE DES DESSINS

D'autres particularités et avantages de l'invention apparaîtront et ressortiront plus en détail à la lecture de la description faite ci-après, en référence aux dessins annexés, donnés uniquement à titre d'exemples illustratifs et non limitatifs, dans lesquels :
La figure 1 illustre, selon une vue de côté, un schéma de principe d'un premier mode de réalisation du dispositif d'optique adaptative de l'invention.
La figure 2 illustre, selon une vue schématique en perspective, un éclaté d'un deuxième mode de réalisation du dispositif d'optique adaptative de l'invention.
La figure 3 illustre, selon une vue schématique de côté, le dispositif d'optique adaptative monté de la figure 2.
La figure 4 illustre, selon une vue schématique de côté, un schéma de principe simplifié du dispositif d'optique adaptative des figures 2 et 3.
La figure 5 illustre, selon une vue de face, le dispositif d'optique adaptative monté de la figure 1.
La figure 6 illustre, selon une vue de face, un schéma de principe simplifié d'un troisième mode de réalisation du dispositif d'optique adaptative de l'invention, les plaques primaire et secondaire étant ici démontées et placées côte à côte, sans bâti, ce troisième mode de réalisation étant éventuellement compatible avec le premier mode de réalisation.
La figure 7 illustre, selon une vue en perspective, un éclaté d'un quatrième mode de réalisation du dispositif d'optique adaptative de l'invention, sans bâti.
La figure 8 illustre, selon une vue schématique en perspective, un éclaté d'un cinquième mode de réalisation du dispositif d'optique adaptative de l'invention.

### MEILLEURE MANIERE DE REALISER L'INVENTION

L'invention concerne, selon un premier aspect, illustré aux figures, un dispositif d'optique adaptative 1. Le dispositif d'optique adaptative 1 est avantageusement destiné à être utilisé dans un système nécessitant l'emploi d'optique adaptative, par exemple un système d'observation microscopique, un système d'observation astronomique, un système de correction visuelle de turbulence atmosphérique, un système d'agrandissement ou de rétrécissement d'image, un système de zoom, un système de déformation d'image, ou un système d'imagerie ophtalmologique.

Selon un mode de réalisation particulier, illustré aux figures, le dispositif d'optique adaptative 1 constitue un miroir déformable. Selon un autre mode de réalisation particulier, le dispositif d'optique adaptative constitue une lentille adaptative. Le dispositif d'optique adaptative 1 est ainsi avantageusement destiné à introduire ou à corriger une aberration optique dans un front d'onde (ou un rayon) lumineux.

Selon un mode de réalisation particulier, le dispositif d'optique adaptative 1 de l'invention inclut tout ou partie du dispositif d'optique adaptative décrit dans la demande de brevet français FR-1909594 du même déposant (FR-1909594 étant le numéro de dépôt).

De la même façon, le procédé de fabrication décrit ci-après inclut tout ou partie du procédé de fabrication décrit dans la demande de brevet FR-1909594 du même déposant (FR-1909594 étant le numéro de dépôt).

Selon l'invention, le dispositif d'optique adaptative comprend au moins une plaque primaire déformable 2, laquelle présente une surface optique 3 destinée à déformer un front d'onde incident par réfraction et/ou réflexion. Avantageusement, en l'absence d'influence extérieure, ladite plaque primaire déformable 2 présente, par construction, une surface globalement courbe ou plane (on peut considérer dans ce dernier cas qu'elle présente une courbure qui est nulle). Par exemple, ladite plaque primaire déformable 2 est légèrement bombée, c'est-à-dire convexe (ou légèrement concave, selon le point de vue). Ladite convexité (ou concavité) de ladite plaque primaire déformable 2 est de préférence suffisamment faible, c'est-à-dire présentant un rayon de courbure relativement important par rapport aux dimensions de ladite plaque primaire déformable 2, pour que la surface de ladite plaque primaire déformable 2 (légèrement) bombée puisse être assimilée, au moins localement (c'est-à-dire au moins sur une fraction de l'aire de ladite plaque primaire déformable 2), à une surface plane. Ainsi, par construction, la surface optique 3, supportée par la plaque primaire déformable 2 et/ou partie intégrante de celle-ci, présente une forme « *au repos* », c'est-à-dire en l'absence de force extérieure appliquée, qui présente une certaine courbure. Cette courbure est nulle, dans le cas d'une forme sensiblement plane, ou assez faible, dans le cas d'une lorsque la surface optique est prévue courbe, c'est-à-dire qu'elle présente au repos une courbure avec un grand rayon de courbure. Il peut être souhaité de modifier rapidement et de manière précise, ainsi que selon un grand nombre de variantes, la courbure de la surface optique 3, notamment pour modifier le profil général de cette dernière, ou encore pour corriger une imperfection de construction. Par exemple, lorsqu'une surface optique 3 au repos est sensée être totalement plane par construction, il est possible qu'elle présente une planéité imparfaite, et le dispositif d'optique adaptative 1 de l'invention permet de corriger cela en imposant une meilleure planéité à la surface optique 3, et ce sans réduire la variété des modes de déformation possibles de cette dernière. A l'inverse, le dispositif d'optique adaptative 1 de l'invention 1 permet avantageusement également d'imposer une courbure générale convexe ou concave contrôlée à la surface optique 3, toujours et ce sans réduire la variété des modes de déformation possibles. Ces modes de déformations sont par exemple réalisés par des déformations locales de la surface optique 3, au moyen d'actionneurs primaires 4 décrits ci-après.

Lorsque le dispositif d'optique adaptative 1 est un miroir, la surface optique 3 est avantageusement sensiblement réfléchissante, c'est-à-dire qu'elle est alors conçue pour réfléchir le front d'onde. Lorsque le dispositif 1 est une lentille adaptative, la surface optique 3 laisse passer au moins en partie le front d'onde, en le réfractant, c'est-à-dire en le déviant.

Selon l'invention, le dispositif d'optique adaptative 1 comprend au moins une pluralité d'actionneurs primaires 4. Ces derniers sont conçus pour appliquer chacun une force respective sur ladite plaque primaire déformable 2 afin de déformer ladite surface optique 3. De manière avantageuse, ladite plaque primaire déformable 2 comprend au moins, à l'opposé de ladite surface optique 3, une face cachée 5, sur laquelle lesdits actionneurs primaires 4 exercent chacun leur force respective. Ainsi, les actionneurs primaires 4 sont, de manière avantageuse, conçus pour appliquer des efforts ponctuels ou quasi-ponctuels à ladite plaque primaire déformable 2, de préférence au niveau de la face cachée 5, plus préférentiellement à l'opposé de la surface optique 3. Lesdits actionneurs primaires 4 sont de préférence conçus pour exercer des forces de traction et/ou de pression sur la plaque primaire déformable 2, ces forces étant plus précisément exercées directement sur la face cachée 5 opposée à la surface optique 3, de manière à déformer de façon contrôlé cette dernière, cette déformation de la surface optique 3 entraînant par conséquent une déformation du front d'onde incident. Ces forces sont de préférence localisées et/ou ponctuelles ou quasi-ponctuelles. Préférentiellement, les actionneurs primaires 4 présentent chacun au moins une portion reliée à ladite face cachée 5. Les actionneurs primaires 4 peuvent être de tout type, notamment piézoélectrique, magnétique, en deux parties, mécanique (vis, vérin ou similaire), etc. Lesdits actionneurs primaires 4 sont de préférence conçus pour être actionnés électriquement.

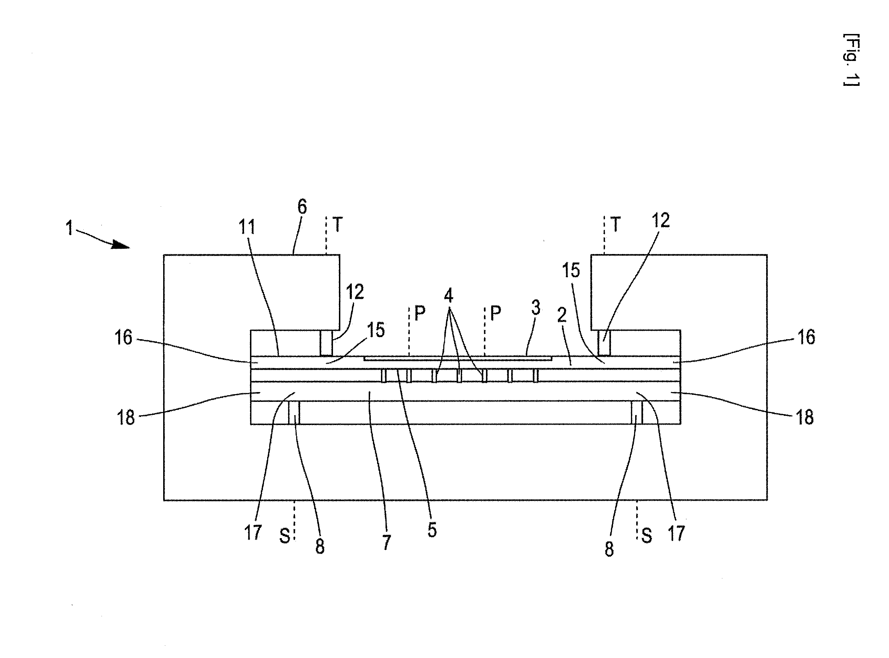

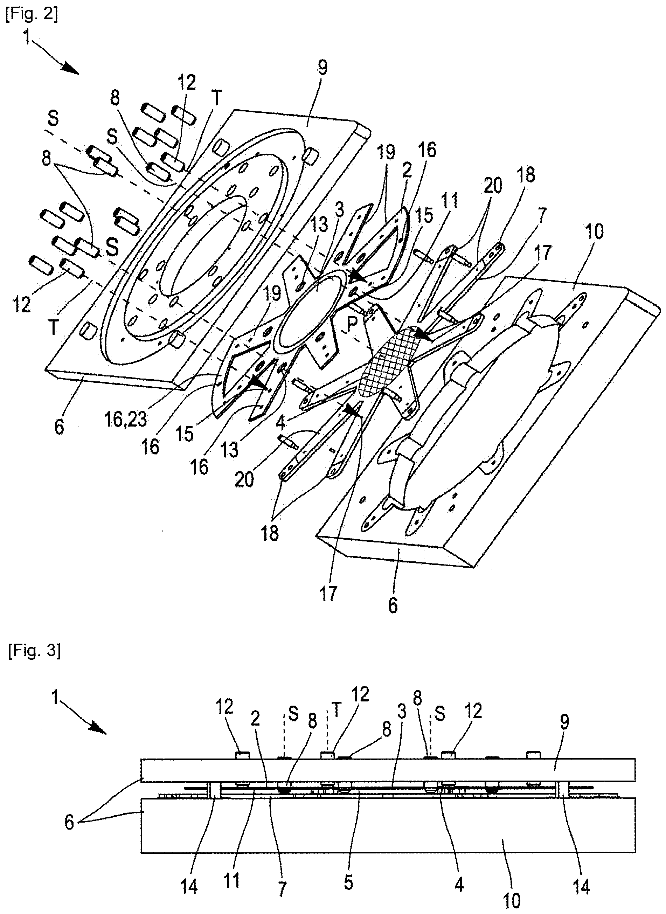

Selon l'invention, le dispositif d'optique adaptative 1 comprend en outre un bâti 6 fixe par rapport à ladite plaque primaire déformable 2. Le bâti 6 est avantageusement sensiblement immobile par rapport aux éléments mobiles du dispositif 1, notamment la plaque primaire déformable 2 et les actionneurs primaires 4. Ainsi, ledit bâti 6 reste de préférence immobile lorsque ladite plaque primaire déformable 2 est déformée pour déformer un front d'onde incident de manière contrôlée. Le bâti 6 peut être en plusieurs parties, préférentiellement solidarisées les unes aux autres, comme illustré aux figures 2 à 5, ou formé d'un seul tenant, c'est-à-dire d'un seul bloc, comme illustré à la figure 1, toutes les combinaisons et montages étant possibles. Le bâti 6 est défini plus généralement comme le support, direct ou indirect, des autres éléments du dispositif d'optique adaptative 1.

Le dispositif 1 comprend de préférence entre 25 et 500 actionneurs primaires 4, par exemple entre 50 et 150 actionneurs primaires 4. Les actionneurs primaires 4 sont selon une variante avantageuse actionnés électriquement, et selon une autre alternative, ils sont actionnés manuellement. Selon encore une autre alternative, ils sont conçus pour être actionnés de plusieurs façons différentes, par exemple électriquement et manuellement.

Selon l'invention, le dispositif d'optique adaptative 1 comprend en outre au moins :
- une plaque secondaire déformable 7, qui supporte les actionneurs primaires 4, et
- un actionneur secondaire 8, relié au bâti 6, et conçu pour exercer sur ladite plaque secondaire déformable 7 une force selon une direction secondaire d'actionnement S pour la déformer, ladite direction secondaire d'actionnement S et ladite plaque secondaire 7 étant sécantes.

Ainsi, lesdits actionneurs primaires 4 sont avantageusement embarqués par ladite plaque secondaire déformable 7. Lesdits actionneurs primaires 4 sont donc de préférence attachés à ladite plaque secondaire déformable 7, qui constitue en quelque sorte une « *plaque actionneur* » qui a la particularité d'être déformable au moyen de l'actionneur secondaire 8. Les actionneurs primaires 4 relient avantageusement la plaque secondaire 7 et la plaque primaire 2, et peuvent être, en outre, attachés à cette dernière. Les actionneurs primaires 4 se trouvent ainsi de préférence au moins en partie, et plus préférentiellement en totalité, entre lesdites plaque primaire 2 et plaque secondaire 7, plus précisément entre ladite face cachée 5 et ladite plaque secondaire déformable 7. Ainsi, les actionneurs primaires 4 ne sont avantageusement pas (directement) liés au bâti 6. De manière préférentielle, la plaque secondaire déformable 7 est plus épaisse et/ou plus rigide que la plaque primaire déformable 2. Ceci permet à la plaque secondaire 7 d'embarquer lesdits actionneurs primaires 2 sans être déformée de manière significative par ces derniers.

Lesdites plaque primaire 2 et plaque secondaire 7 sont avantageusement positionnées l'une en face de l'autre, de préférence sensiblement parallèlement l'une à l'autre. En d'autres termes, la plaque primaire 2 et la plaque secondaire 7 s'étendent de préférence chacune de part et d'autre d'un plan moyen, lesdits deux plans moyens respectifs étant préférentiellement sensiblement parallèles ou quasi-parallèles l'un à l'autre, avec par exemple une tolérance inférieure ou égale à 10°, avantageusement inférieure ou égale à 7°, plus avantageusement inférieure ou égale à 4°. Ceci est avantageusement valable au repos, que la courbure de ladite plaque primaire 2 soit nulle (cas où l'on a une planéité au repos) ou très faible (cas où la plaques primaire 2 et secondaire 7 présentent une courbure non-nulle au repos, mais à grand rayon de courbure).

L'actionneur secondaire 8 est avantageusement attaché au bâti 6 et supporté par ce dernier. En d'autres termes, l'actionneur secondaire 8 est de préférence embarqué par le bâti 6. Le dispositif d'optique adaptative 1 comprend préférentiellement plusieurs actionneurs secondaires 8 tel que celui mentionné ci-avant, et la présente description mentionne un actionneur secondaire 8 seulement à des fins de simplification, ce qui est valable pour un seul actionneur secondaire 8 étant également valable pour une pluralité d'actionneurs secondaires 8. Ainsi, le dispositif d'optique adaptative 1, dans les modes de réalisation particuliers illustrés aux figures, comprend une pluralité d'actionneurs secondaires 8, mais il est également envisageable qu'il ne comprenne qu'un seul actionneur secondaire 8, dans un mode de réalisation particulier non illustré. L'expression « *l'actionneur secondaire 8* » peut donc être remplacées, *mutatis mutandis,* par l'expression « *les actionneurs secondaires 8* », et *vice versa.* Le dispositif 1 comprend de préférence au moins quatre actionneurs secondaires 8, plus préférentiellement au moins six actionneurs secondaires 8, encore plus préférentiellement au moins huit actionneurs secondaires 8. L'actionneur secondaire 8 relie avantageusement le bâti 6 et la plaque secondaire déformable 7, et peut être, en outre, attaché à cette dernière. Ainsi, l'actionneur secondaire 8 n'est avantageusement pas (directement) attaché à la plaque primaire déformable 2, et n'est de préférence pas conçu pour exercer (directement) sur celle-ci une force.

Selon une variante particulière, le bâti 6 comprend, comme illustré aux figures 2 à 5, une première et une seconde flasques 9, 10 entre lesquelles et/ou au sein desquelles sont agencées les plaques primaire 2 et secondaire 7. L'actionneur secondaire 8 se trouve ainsi de préférence au moins en partie entre lesdites plaque secondaire déformable 7 et première flasque 9 et/ou au sein de ces dernières, plus précisément entre et/ou au sein de ladite plaque secondaire 7 et ladite première flasque 9.

L'actionneur secondaire 8 est donc avantageusement attaché auxdites plaque secondaire 7 et première flasque 9. Le dispositif 1 comprend de préférence en outre un ou plusieurs moyens d'attache 14 permettant de solidariser ensemble lesdites première et seconde flasques 9, 10, lesdits moyens d'attache étant par exemple formés par des vis ou des rivets, ou tout autre moyen approprié.

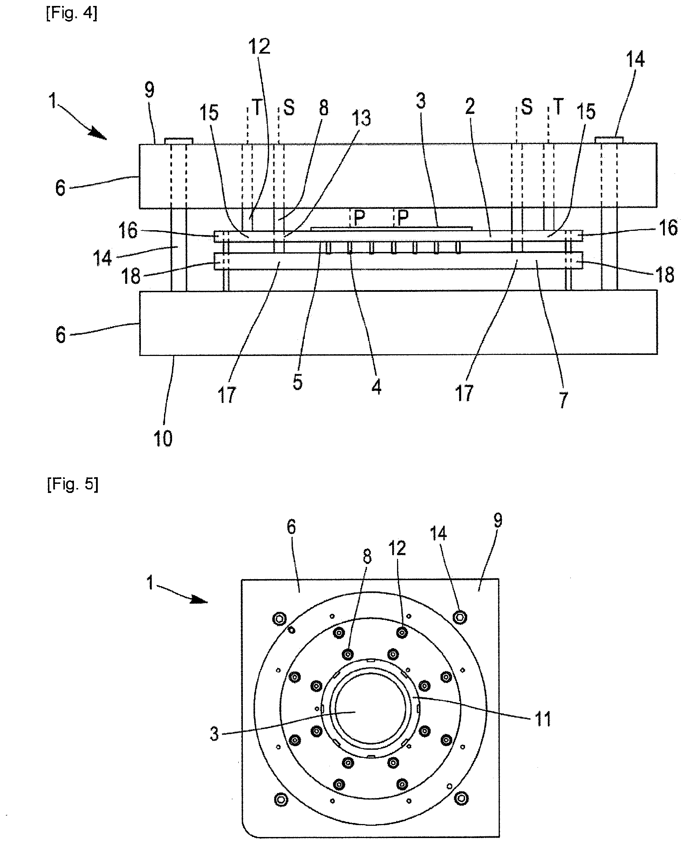

L'actionneur secondaire 8 est de préférence conçus pour exercer une force de traction et/ou de pression sur la plaque secondaire déformable 7, de préférence selon ladite direction secondaire d'actionnement S. Cette force peut être exercée sur l'une ou l'autre des deux faces opposées de la plaque secondaire 7, comme l'illustrent les modes de réalisations des figures 1 et 4. Cette force est de préférence localisée et/ou ponctuelles ou quasi-ponctuelle sur la plaque secondaire 7, mais modifie avantageusement la courbure générale de celle-ci ou au moins une portion significative de ladite courbure. L'actionneur secondaire 8 peut être de tout type, notamment piézoélectrique, magnétique, en deux parties, mécanique (vis, vérin ou similaire), etc. L'actionneur secondaire 8 est de préférence conçu pour être actionné électriquement et/ou manuellement. L'actionneur secondaire 8 est avantageusement distinct des actionneurs primaires 4, notamment par sa nature, sa position, ainsi que par sa fonction. L'actionneur secondaire 8 est de préférence plus puissant et/ou plus grand que chacun des actionneurs primaires 4. De préférence, l'actionneur secondaire 8 présente des dimensions plus importantes que chacun desdits actionneurs primaires 4, et présente par exemple une course plus importante que chacun des actionneurs primaires 4. Par ailleurs, le dispositif 1 comprend préférentiellement moins d'actionneur(s) secondaire(s) 8 que d'actionneurs primaires 4. Le dispositif 1 comprend par exemple huit actionneurs secondaires 8.

Ainsi, lorsque l'actionneur secondaire 8 (ou les actionneurs secondaires 8) déforme la plaque secondaire 7, laquelle porte avantageusement les actionneurs primaires 4, l'alignement de ces derniers est modifié. En d'autres termes, certains des actionneurs primaires 4 vont être déplacés, du fait qu'ils sont embarqués par la plaque secondaire 7 déformée, selon la direction secondaire d'actionnement S, modifiant par conséquent la courbure de la plaque primaire 2, en particulier au niveau de la face cachée 5 et donc aussi au niveau de la surface optique 3, laquelle est donc avantageusement déformée de manière à ce que sa courbure soit modifiée. Cette modification de courbure n'est pas forcément locale, mais peut être au contraire avantageusement plus globale, c'est-à-dire qu'une partie significative, de préférence une majeure partie, plus préférentiellement encore la totalité de la surface optique 3, voit sa courbure être modifiée. Une telle configuration permet, grâce aux actionneurs secondaires 8 et à la plaque secondaire déformable 7, de donner une courbure particulière choisie à une portion au moins de la plaque primaire 2, et plus précisément à la surface optique 3, les actionneurs primaires 4, sans être activés, communicant au moins une partie du mouvement des actionneurs secondaires 8 déformant la plaque secondaire 7 à la face cachée 5 et donc à la surface optique 3. Plus précisément, le dispositif 1 de l'invention permet de modifier de manière dynamique la courbure générale de la plaque primaire 2 via une déformation de la plaque secondaire 7, tout en gardant intacte ou quasi intacte la course des actionneurs primaires 4, qui conservent donc toutes leurs capacités de déformations locales de la surface optique 3.

La force, de préférence de traction ou de pression, exercée par l'actionneur secondaire 8 sur la plaque secondaire 7, est dirigée préférentiellement selon la direction secondaire d'actionnement S, qui est sécante avec, c'est-à-dire qui passe par, la plaque secondaire 7. En d'autres termes, la direction secondaire d'actionnement S est sensiblement dirigée vers la plaque secondaire déformable 7, et est de préférence sensiblement à l'oblique ou à la perpendiculaire (au moins localement) de cette dernière. Selon un mode de réalisation préférentiel, la direction secondaire d'actionnement S est sensiblement perpendiculaire à la plaque secondaire 7, et est notamment sensiblement perpendiculaire à un plan moyen de cette dernière, ou quasi-perpendiculaire (avec un angle compris entre 87° et 93° par exemple). Ainsi, la direction secondaire d'actionnement S traverse avantageusement la plaque secondaire 7 (et en particulier dans son épaisseur).

De manière préférentielle, les actionneurs primaires 4 sont chacun conçu pour exercer sur ladite plaque primaire déformable 2 une force selon une direction primaire d'actionnement P, laquelle est avantageusement sensiblement parallèle à la direction secondaire d'actionnement S. La direction primaire d'actionnement P est préférentiellement sécante avec la plaque primaire 2, et plus préférentiellement est sécante avec la surface optique 3.

Dans des exemples de réalisation selon les revendications, ladite plaque primaire déformable 2 présente au moins une surface périphérique 11 s'étendant autour et/ou à côté de ladite surface optique 3. Ladite surface optique 3 est ainsi avantageusement une zone sensiblement centrale de la plaque primaire déformable 2, et plus précisément de la face opposée à la face cachée 5 de la plaque primaire déformable 2. La surface périphérique 11 constitue une ou plusieurs portions de la plaque primaire 2 entourant au moins en partie la surface optique 3, laquelle forme donc une partie centrale de la plaque primaire déformable 2. Ledit dispositif d'optique adaptative 1 comprend en outre au moins un actionneur externe 12, qui est relié au bâti 6 et conçu pour appliquer une force sur ladite surface périphérique 11 afin de déformer ladite plaque primaire déformable 2. L'actionneur externe 12 est donc supporté (c'est-à-dire embarqué) par le bâti 6, et en particulier fixé à ce dernier. De manière préférentielle, l'actionneur externe 12 est conçu pour exercer sur ladite plaque primaire déformable 2 une force, de préférence de traction et/ou de pression, selon une direction tertiaire d'actionnement T, laquelle est avantageusement sensiblement parallèle à la direction secondaire d'actionnement S et/ou parallèle à la direction primaire d'actionnement P. Cette force pouvant être exercée sur l'une ou l'autre des deux faces opposées de la plaque primaire 2. Cette force est de préférence localisée et/ou ponctuelles ou quasi-ponctuelle sur la plaque primaire 2, mais modifie avantageusement la courbure générale de celle-ci ou au moins une portion significative de ladite courbure. L'actionneur externe 12 peut être de tout type, notamment piézoélectrique, magnétique, en deux parties, mécanique (vis, vérin ou similaire), etc. L'actionneur externe 12 est de préférence conçu pour être actionné électriquement et/ou manuellement. L'actionneur externe 12 est distinct des actionneurs primaires 4, notamment par sa nature, sa position, ainsi que par sa fonction. L'actionneur externe est de préférence plus puissant et/ou plus grand que chacun des actionneurs primaires 4. L'actionneur externe 12 est distinct de l'actionneur secondaire 8, notamment par sa position et sa fonction. Par ailleurs, l'actionneur externe 12 est avantageusement être sensiblement similaire, par sa nature, ses dimensions, sa puissance et/ou sa course, à l'actionneur secondaire 8, voire interchangeable avec ce dernier. Une telle configuration permet de simplifier la fabrication du dispositif d'optique adaptative 1 et d'en diminuer les coûts. De préférence, l'actionneur externe 12 présente des dimensions plus importantes que chacun desdits actionneurs primaires 4, et présente par exemple une course plus importante que chacun des actionneurs primaires 4. Par ailleurs, le dispositif 1 comprend préférentiellement moins d'actionneur(s) externe(s) 12 que d'actionneurs primaires 4. Le dispositif 1 comprend par exemple huit actionneurs externe 12.

Chaque actionneur externe 12 est conçu pour exercer une force sur une zone de la plaque primaire déformable 2, en substance la surface périphérique 11, qui est à côté et/ou autour de la surface optique 3. L'actionneur externe 12 n'est avantageusement pas (directement) attaché à la plaque secondaire déformable 7, et n'est de préférence pas conçu pour exercer (directement) sur celle-ci une force. La direction tertiaire d'actionnement T est préférentiellement sécante avec la plaque primaire 2, et plus préférentiellement est sécante avec la surface périphérique 11, mais de préférence n'est pas sécante avec la surface optique 3. La direction secondaire d'actionnement S n'est de préférence pas sécante avec la surface optique 3. La direction primaire d'actionnement P n'est de préférence pas sécante avec la surface périphérique 11. Selon un mode de réalisation préférentiel, la direction primaire d'actionnement P et/ou la direction tertiaire d'actionnement T est/sont sensiblement perpendiculaire(s) à la plaque primaire 2, et est notamment sensiblement perpendiculaire à un plan moyen de cette dernière, ou quasi-perpendiculaire (avec un angle compris entre 87° et 93° par exemple).

Le dispositif d'optique adaptative 1 comprend préférentiellement plusieurs actionneurs externes 12 tel que celui mentionné ci-avant, et la présente description mentionne un actionneur externe 12 seulement à des fins de simplification, ce qui est valable pour un seul actionneur externe 12 étant également valable pour une pluralité d'actionneurs externes 12. Ainsi, le dispositif d'optique adaptative 1, dans les modes de réalisation particuliers illustrés aux figures, comprend une pluralité d'actionneurs externes 12, mais il est également envisageable qu'il ne comprenne qu'un seul actionneur externe 12, dans un mode de réalisation particulier non illustré. L'expression « *l'actionneur externe* 12 » peut donc être remplacées, *mutatis mutandis,* par l'expression « *les actionneurs* externes 12 », et *vice versa.* Le dispositif 1 comprend de préférence au moins quatre actionneurs externes 12, plus préférentiellement au moins six actionneurs externes 12, encore plus préférentiellement au moins huit actionneurs externes 12. L'actionneur externe 12 relie avantageusement le bâti 6 et la plaque primaire déformable 7, et peut être, en outre, attaché à cette dernière.

Lorsque l'actionneur externe 12 (ou les actionneurs externes 12) déforme la plaque primaire 2, laquelle comporte la surface optique 3, la courbure de cette dernière est avantageusement modifiée. Ainsi, sans avoir besoin de mettre en œuvre les actionneurs primaires 4, la courbure de la plaque primaire 2, et donc de la surface optique 3, peut être modifiée du fait de la force exercée par l'actionneur externe 12. Par conséquent, la courbure de la surface optique 3 peut être (préalablement) modifiée grâce à l'actionneur externe 12, de façon à ce que la course des actionneurs primaires 4 ne soit pas mise en œuvre immédiatement, leur précision de réglage restant donc optimale. Ceci permet de réaliser par la suite, après mise en œuvre de l'actionneur externe 12, un réglage plus fin, en particulier une déformation plus localisé et contrôlée, de la surface optique 3, que si la course des actionneurs primaires 4 était mise à contribution. De plus, l'actionneur externe 12 permet de conférer une courbure particulière à la plaque primaire 2 et donc à la surface optique 3, et ce soit sans mettre à contribution l'actionneur secondaire 8, soit en combinaison avec ce dernier pour procéder à une modification plus précise, plus variée et/ou selon une plus grande amplitude de la courbure désirée de la surface optique 3.

L'actionneur externe 12 est ainsi conçu pour pouvoir être mis en œuvre en combinaison avec l'actionneur secondaire 8 pour modifier, directement et/ou indirectement, la courbure de la surface optique 3, peu importe que cette combinaison ait lieu de manière concomitante (ou en partie concomitante), les actionneurs secondaire 8 et externe 12 étant mis en œuvre en même temps (ou en partie en même temps), ou successive, les actionneurs secondaire 8 et externe 12 étant mis en œuvre l'un après l'autre. Ainsi, l'actionneur externe 12 est de manière avantageuse conçu pour suivre la déformation de la surface optique 3 induite (indirectement) par la mise en œuvre de l'actionneur secondaire 8. Inversement, l'actionneur secondaire 8 peut être avantageusement conçu pour suivre la déformation de la surface optique 3 induite (directement) par la mise en œuvre de l'actionneur externe 12. Une telle configuration permet de garder les actionneurs primaires 4 dans une configuration optimale et donc d'obtenir les meilleures performances possibles.

Selon une variante particulière, l'actionneur externe 12 se trouve ainsi de préférence au moins en partie entre lesdites plaque secondaire déformable 7 et première flasque 9 et/ou au sein de ces dernières, plus précisément entre et/ou au sein de ladite plaque primaire 2 et ladite première flasque 9.

L'actionneur secondaire 8 est donc avantageusement attaché auxdites plaque primaire 2 et première flasque 9.

Selon un mode de réalisation particulier, illustrée notamment aux figures 2 à 5 et particulièrement visible à la figure 4, la plaque primaire 2 présente un ou plusieurs orifices primaires 13 traversants, chaque actionneur secondaire 8 étant conçu pour traverser l'un des orifices primaires 13 correspondant de manière à pouvoir exercer une force sur ladite plaque secondaire 7 pour la déformer, sans exercer (directement) de force sur ladite plaque primaire 2. Ainsi, dans ce dernier mode de réalisation, et éventuellement dans d'autres alternatives, la plaque primaire 2 est avantageusement agencée entre la plaque secondaire 7 et la partie du bâti 6 à laquelle l'actionneur secondaire 8 est reliée, cette partie du bâti 6 embarquant avantageusement l'actionneur secondaire 8, ladite partie du bâti 6 étant par exemple formée par la première flasque 9. Une telle configuration permet, en particulier lorsque l'actionneur externe 12 est attaché à la première flasque 9 (et embarqué et/ou supporté par cette dernière), de monter les actionneurs secondaire(s) 8 et externe(s) 12 sur une même partie du bâti 6, en l'occurrence ici la première flasque 9.

De manière préférentielle, la surface périphérique 11 comprend au moins une partie primaire mobile 15 reliée au moins audit actionneur externe 12 pour que ce dernier puisse la déformer, afin que ladite partie mobile 15 transmette un effort de déformation à ladite surface optique 3, la surface périphérique 11 comprenant en outre au moins une partie primaire fixe 16 respective qui est attachée de manière fixe audit bâti 6 pour être immobilisée relativement à ce dernier, par exemple à l'aide d'un moyen de fixation tel que de la colle (figure 1) ou une ou plusieurs vis (figures 2-3). De manière préférentielle, la plaque secondaire 7 comprend une partie secondaire mobile 17 reliée au moins audit actionneur secondaire 8 pour que ce dernier puisse la déformer, afin que ladite partie secondaire mobile 17 transmette un effort de déformation à ladite surface optique 3 via lesdits actionneurs primaires 4 (sans utiliser leur course, c'est-à-dire sans les actionneur), la plaque secondaire 7 comprenant en outre au moins une partie secondaire fixe 18 respective qui est attachée de manière fixe audit bâti 6 pour être immobilisée relativement à ce dernier, par exemple à l'aide d'un moyen de fixation tel que de la colle (figure 1) ou une ou plusieurs vis (figures 2-3). La partie secondaire fixe 18 comprend par exemple un bord de la plaque secondaire 7. La partie primaire fixe 16 comprend par exemple un bord de la plaque primaire 2.

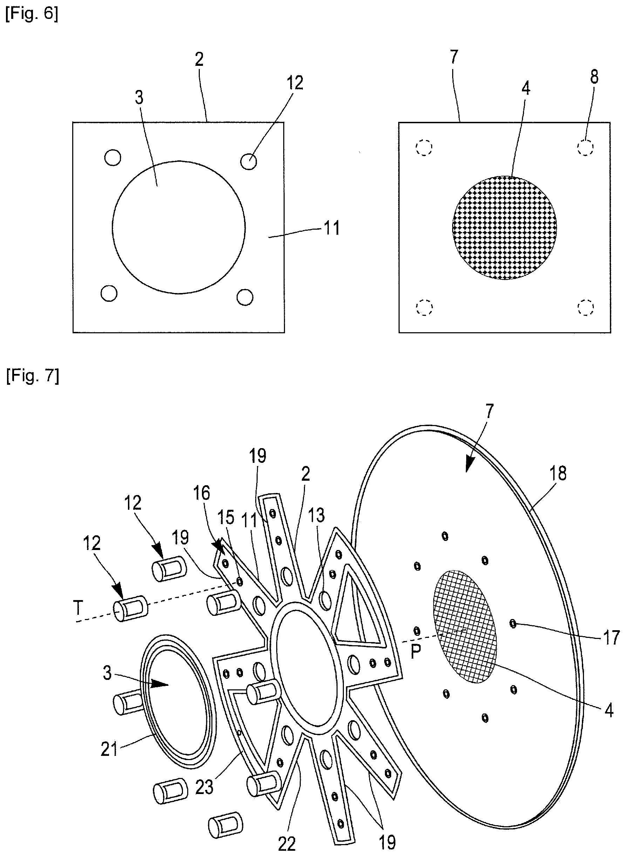

Selon un mode de réalisation particulier, illustré notamment aux figures 2 et 7, lesdites plaques primaire et secondaire 2, 7 présentent des formes générales sensiblement similaires, et par exemples elles présentent des formes en étoile respectives avec les mêmes nombres de branches, par exemple au moins quatre branches, selon un autre exemple au moins six branches, et selon encore un autre exemple, au moins huit branches, ou selon encore un autre exemple, exactement huit branches. Selon une variante, illustrée notamment à la figure 6, lesdites plaques primaire et secondaire 2, 7 présentent chacune une forme générale sensiblement polygonale, et en particulier sensiblement rectangulaire ou carrée. La figure 6 illustre cette dernière variante, le dispositif d'optique adaptative étant démonté et non complet (bâti 6 non illustré), la plaque primaire 2 étant à gauche et reliée à quatre actionneurs externes 12, la plaque secondaire 7 étant à droite et reliée à quatre actionneurs secondaires 8 tout en embarquant les actionneurs primaires 4, les plaques 2, 7 étant vues de face, avant d'être empilée par exemple, la plaque primaire 2 sur la plaque secondaire 7, selon la même orientation.

Selon un mode de réalisation particulier, illustré notamment à la figure 7, lesdites plaques primaire et secondaire 2, 7 présentent des formes générales sensiblement différente, et par exemple la plaque primaire présente une forme en étoile (avec huit branche selon une variante) tandis que la plaque secondaire 7 présente une forme sensiblement circulaire, en particulier ronde.

Selon un mode de réalisation particulier, et comme illustré aux figures 2 et 7, la plaque primaire 2 comprend des pattes primaires 19 formant au moins en partie la surface périphérique 11, et de préférence attachées de manière fixe à la surface optique 3. Chaque patte primaire 19 est par exemple en forme d'une partie de plaque mince, déformable, qui se déforme et/ou se déplace avantageusement, par exemple se plie, sous l'action d'une force externe exercée à sa surface, notamment une force exercée par l'actionneur externe 12. La plaque primaire déformable 2 et/ou la surface optique 3 comprend avantageusement un centre géométrique primaire. Préférentiellement, chaque patte primaire 19 s'étend, à partir de ladite surface optique 3, radialement relativement audit centre géométrique primaire, par exemple vers l'extérieur, comme illustré notamment aux figures 2 et 7. De manière avantageuse, comme illustré à la figure 2, lesdites pattes primaires 19 sont réparties angulairement de façon uniforme autour dudit centre géométrique primaire. Chaque patte primaire 19 constitue par exemple l'une des branches de la plaque primaire 2 mentionnées ci-avant. Ladite partie primaire fixe 16 comprend par exemple une extrémité externe primaire (à l'opposé de la surface optique 3) d'au moins l'une desdites pattes primaires 19, tandis que ladite partie primaire mobile 15 comprend par exemple au moins une partie intermédiaire de ladite patte primaire 19 située entre ladite surface optique 3 et ladite extrémité externe primaire.

De manière optionnelle, la surface périphérique 11 comprend en outre une partie de liaison primaire 23, conçue pour relier l'extrémité respective de deux pattes primaires 19 adjacentes. La partie de liaison primaire 23, avantageusement située à distance de la surface optique 3, relie donc ensemble lesdites deux pattes primaires 19, et on peut éventuellement considérer que ladite partie de liaison primaire 23 fait partie des deux pattes primaires 19. Dans une telle configuration, au moins l'un dudit ou desdits actionneurs externes 12 est conçu pour exercer une force sur ladite partie de liaison primaire 23 afin de la déformer et d'induire ainsi une déformation au reste de la plaque primaire 2. Ladite partie de liaison primaire 23 forme avantageusement soit ladite partie primaire mobile 15 (ou au moins l'une desdites parties primaires mobiles 15), ce qui permet d'utiliser un actionneur externe 12 au lieu de deux, soit ladite partie primaire fixe 16 (ou au moins l'une desdites parties primaires fixes 16), ce qui permet de n'utiliser qu'un seul moyen de fixation de la partie primaire fixe 16 au bâti 6 (par exemple une vis au lieu de deux, ou moins de ce moyen s'il s'agit de colle). De manière optionnelle également, la plaque secondaire 7 comprend en outre une partie de liaison secondaire (non illustrée) conçue pour relier l'extrémité respective de deux pattes secondaires 20 adjacentes. La partie de liaison secondaire, avantageusement située à distance des actionneurs primaires 4, relie donc ensemble lesdites deux pattes secondaires 20, et on peut éventuellement considérer que ladite partie de liaison secondaire fait partie des deux pattes secondaires 20. Dans une telle configuration, au moins l'un dudit ou desdits actionneurs secondaires 8 est conçu pour exercer une force sur ladite partie de liaison secondaire afin de la déformer et d'induire ainsi une déformation au reste de la plaque primaire 2. Ladite partie de liaison secondaire forme avantageusement soit ladite partie secondaire mobile 17 (ou au moins l'une desdites parties secondaires mobiles 17), ce qui permet d'utiliser un actionneur secondaire 8 au lieu de deux, soit ladite partie secondaire fixe 18 (ou au moins l'une desdites parties secondaires fixes 18), ce qui permet de n'utiliser qu'un seul moyen de fixation de la partie secondaire fixe 18 au bâti 6 (par exemple une vis au lieu de deux, ou moins de ce moyen s'il s'agit de colle).

Selon un mode de réalisation particulier, compatible avec le précédent, et comme illustré à la figure 2, la plaque secondaire 7 comprend des pattes secondaires 20 s'étendant à partir d'une portion de la plaque secondaire 7 qui supporte lesdits actionneurs primaires 4. Chaque patte secondaire 20 est par exemple en forme d'une partie de plaque mince, déformable, qui se déforme et/ou se déplace avantageusement, par exemple se plie, sous l'action d'une force externe exercée à sa surface, notamment une force exercée par l'actionneur secondaire 8. La plaque secondaire déformable 7 comprend avantageusement un centre géométrique secondaire. Préférentiellement, chaque patte secondaire 20 s'étend, à partir de la portion de la plaque secondaire 7 supportant lesdits actionneurs primaires 4, radialement relativement audit centre géométrique secondaire, par exemple vers l'extérieur, comme illustré notamment à la figure 2. De manière avantageuse, comme illustré à la figure 2, lesdites pattes secondaire 20 sont réparties angulairement de façon uniforme autour dudit centre géométrique secondaire. Chaque patte secondaire 20 constitue par exemple l'une des branches de la plaque secondaire 7 mentionnées ci-avant. Ladite partie secondaire fixe 18 comprend par exemple une extrémité externe secondaire (à l'opposé des actionneurs primaires 4) d'au moins l'une desdites pattes primaires 19, tandis que ladite partie secondaire mobile 17 comprend par exemple au moins une partie intermédiaire de ladite patte secondaire 20 située entre lesdits actionneurs primaires 4 et ladite extrémité externe secondaire. Avantageusement, chaque patte primaire 19 est positionnée face à l'une desdites pattes secondaires 20 correspondante.

Lesdites plaques primaire 2 et secondaire 7, bien que déformables sous l'effet d'actionneurs, présentent de préférence chacune une tenue mécanique propre.

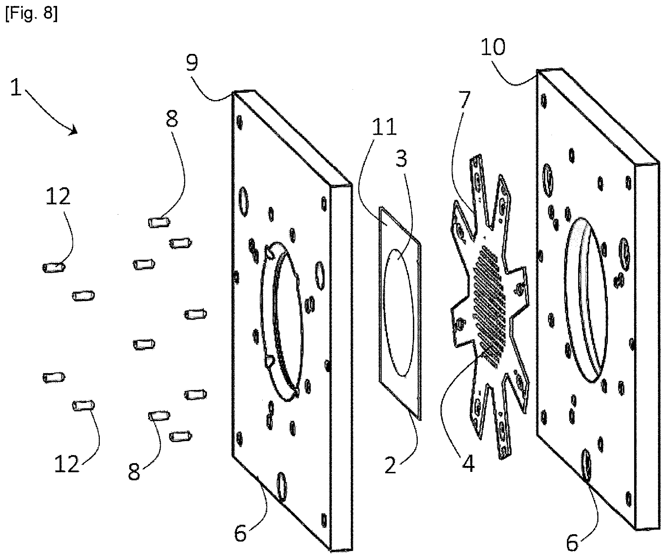

La figure 8 illustre un dispositif d'optique adaptative 1 selon un cinquième mode de réalisation de l'invention, qui est très semblable à celui illustré à la figure 2, mais qui se différencie de ce dernier en ce que la plaque primaire déformable 2 n'a pas une forme d'étoile mais une forme de carré, tandis que la plaque secondaire déformable 7 conserve une forme d'étoile. La surface optique 3 présente, dans le dispositif 1 illustré à la figure 8, une forme circulaire. Il est donc possible de réaliser un grand nombre de configurations différentes de dispositifs d'optique adaptative 1 conformes à l'invention, par exemple selon les déformations voulues de la surface optique 3.

L'invention concerne, selon un second aspect, un procédé de fabrication d'un dispositif d'optique adaptative 1. Le procédé est préférentiellement mis en œuvre pour fabriquer le dispositif d'optique adaptative 1 décrit ci-dessus et ci-après. La description qui précède, comme celle qui suit, concernant le dispositif d'optique adaptative 1 s'applique donc de préférence également au procédé de fabrication selon l'invention, et inversement, la description qui suit concernant le procédé de fabrication s'applique préférentiellement également au dispositif d'optique adaptative 1 selon l'invention.

Ainsi, selon le second aspect de l'invention, le procédé de fabrication comporte au moins :
- une étape primaire de réalisation ou de fourniture d'une plaque primaire déformable 2 présentant une surface optique 3 destinée à déformer un front d'onde incident par réfraction et/ou réflexion,
- une étape secondaire de réalisation ou de fourniture d'une plaque secondaire déformable 7,
- une étape de mise en place d'une pluralité d'actionneurs primaires 4, de manière à ce que, d'une part, lesdits actionneurs primaires 4 puissent appliquer chacun une force respective sur ladite plaque primaire déformable 2 afin de déformer ladite surface optique 3, et d'autre part, lesdits actionneurs primaires 4 soient supportés par ladite plaque secondaire 7,
- une étape de mise en place d'au moins un actionneur secondaire 8 pour que d'une part ledit actionneur secondaire 8 soit relié à un bâti 6, lequel est fixe par rapport à ladite plaque primaire déformable 2, et d'autre part ledit actionneur secondaire 8 puisse exercer sur ladite plaque secondaire déformable 7 une force selon une direction secondaire d'actionnement S pour la déformer, ladite direction secondaire d'actionnement S et ladite plaque secondaire 7 étant sécantes, ladite plaque primaire déformable 2 présentant au moins une surface périphérique 11 s'étendant autour et/ou à côté de ladite surface optique 3, le procédé comprenant en outre une étape de mise en place d'au moins un actionneur externe 12, de manière à ce que, d'une part, il soit relié au bâti 6, et que d'autre part, il puisse appliquer une force sur ladite surface périphérique 11 afin de déformer ladite plaque primaire déformable 2, l'actionneur externe 12 étant distinct de l'actionneur secondaire 8.

Selon un mode de réalisation particulier, le procédé de fabrication comprend en outre au moins les étapes successives suivantes :
- une étape de modification de la courbure de ladite plaque secondaire 7 en exerçant au moyen de l'actionneur secondaire 8 une force sur ladite plaque secondaire 7, de sorte à impartir à cette dernière une configuration à courbure modifiée,
- une étape de fixation secondaire, alors que ladite plaque secondaire 7 se trouve en configuration à courbure modifiée, de ladite plaque secondaire 7 et/ou d'un bord de ladite plaque primaire 2, par exemple à l'aide de colle ou de vis, sur le bâti 6.

Ladite étape de fixation secondaire comprend par exemple le collage ou le vissage au bâti 6 d'une partie secondaire fixe 18 de la plaque secondaire 7, et plus précisément le collage ou le vissage au bâti 6 d'une partie d'une ou plusieurs pattes secondaires 20 de la plaque secondaire 7.

Dans ce dernier mode de réalisation particulier, le procédé de fabrication comprend éventuellement une étape de désolidarisation de l'actionneur secondaire 8 et du bâti 6. Ainsi, ledit actionneur secondaire 8 est préférentiellement amovible, c'est-à-dire qu'il est conçu pour pouvoir être désolidarisé, de préférence de manière facile, dudit bâti 6. Une telle configuration permet d'alléger et de simplifier le dispositif 1 final, tout en conférant à la surface optique 3 une configuration à courbure modifiée de la plaque secondaire 7, cette modification de courbure étant conférée de la plaque secondaire 7 à courbure modifiée à la plaque primaire 2 via lesdits actionneurs primaires 4, sans que ces derniers doivent être actionnés, puisque lesdits actionneurs primaires 4 relient avantageusement lesdites plaques primaire 2 et secondaire 7.

Selon un mode de réalisation particulier, compatible avec ceux mentionnés ci-avant, le procédé de fabrication comprend en outre au moins les étapes successives suivantes :
- une étape de modification de la courbure de ladite plaque primaire 2 en exerçant au moyen de l'actionneur externe 12 une force sur ladite plaque primaire 2, de sorte à impartir à cette dernière une configuration à courbure modifiée,
- une étape de fixation primaire, alors que ladite plaque primaire 2 se trouve en configuration à courbure modifiée, d'une portion d'attache de ladite plaque primaire 2, par exemple à l'aide de colle ou de vis, sur le bâti 6.

Dans ce dernier mode de réalisation particulier, le procédé de fabrication comprend éventuellement une étape de désolidarisation de l'actionneur externe 12 et du bâti 6. Ainsi, ledit actionneur externe 12 est, dans ce dernier mode particulier de réalisation, préférentiellement amovible, c'est-à-dire qu'il est conçu pour pouvoir être désolidarisé, de préférence de manière facile, dudit bâti 6. Une telle configuration permet d'alléger et de simplifier le dispositif 1 final, tout en conférant à la surface optique 3 une courbure modifiée choisie via une modification de courbure de la plaque primaire 2 impartie initialement par l'actionneur externe 12 (et la deuxième plaque 22), sans que les actionneurs primaires 4 doivent être actionnés, et donc en conservant leur course et leur précision pour réaliser des déformations localisées ultérieures.

Selon un mode de réalisation particulier, compatible avec ceux qui précèdent, le procédé de fabrication d'un dispositif d'optique adaptative comprend une étape de solidarisation d'une première et d'une deuxième plaque 21, 22 distinctes afin de former ladite plaque primaire 2, ladite première plaque 21 formant au moins la surface optique 3 tandis que ladite deuxième plaque 22 forme au moins ladite surface périphérique 11. Un telle configuration est illustrée de manière non limitative à la figure 7. La première plaque 21 est par exemple sensiblement circulaire, en particulier ronde, et vient être fixée, par exemple par collage ou vissage, au centre de la deuxième plaque 22. Cette dernière comprend par exemple les pattes primaires 19.

Ainsi, selon le mode de réalisation qui précède, la plaque primaire 2 est formée d'une première et d'une deuxième plaque 21, 22 distinctes mais solidarisées l'une à l'autre, par exemple par collage ou vissage, ladite première plaque 21 formant au moins la surface optique 3 tandis que ladite deuxième plaque 22 forme au moins ladite surface périphérique 11. Alternativement, la plaque secondaire 7 est d'un seul tenant, c'est-à-dire d'un seul bloc, et la surface optique 3 est par exemple formée directement dessus, par traitement chimique et/ou mécanique (polissage, etc.).

Avantageusement, lors de ladite étape de fixation primaire, ladite portion d'attache est formée soit par une partie de ladite deuxième plaque 22, par exemple une partie secondaire fixe 18 de la surface périphérique 11, soit par un bord de ladite première plaque 21. Ainsi, ladite étape de fixation primaire comprend par exemple le collage ou le vissage au bâti 6 d'une partie primaire fixe 16 de la surface périphérique 11, et plus précisément le collage ou le vissage au bâti 6 d'une partie d'une ou plusieurs pattes primaire 19 de la surface périphérique 11.

Dans ce dernier mode de réalisation particulier, le procédé de fabrication comprend éventuellement une étape de désolidarisation desdites première et deuxième plaques 21, 22. De manière avantageuse, dans ce dernier mode de réalisation particulier, ladite deuxième plaque 22 est donc amovible, et est en particulier fixée de manière réversible à ladite première plaque 21, c'est-à-dire que lesdites première et deuxième plaques 21, 22 sont conçues pour pouvoir être désolidarisées, de préférence de manière facile, l'une de l'autre. Une telle configuration permet d'alléger et de simplifier le dispositif 1 final, tout en conférant à la surface optique 3 une courbure modifiée comme décrit précédemment, mais cette fois via la deuxième plaque 22 qui est d'abord déformée grâce à l'actionneur externe 12, et qui va ainsi impartir une configuration à courbure modifiée à la première plaque 21 (et donc la surface optique 3), puisque les première et deuxième plaques 21, 22 sont alors fixées l'une à l'autre, ladite deuxième plaque 22 étant ensuite retirée après que des bords de la première plaque 21 aient été fixés au bâti 6 afin que la surface optique 3 conserve la configuration à courbure modifiée.

Le dispositif d'optique adaptative 1 de l'invention, de préférence obtenu via le procédé de fabrication de l'invention, permet de réaliser des opérations de déformation extrêmement précises et selon une grande variation d'amplitudes de courbure d'une surface optique, une telle configuration offrant une importante variété de déformations différentes de front d'onde incident, et étant facilement adaptable pour un grand nombre d'applications.

### POSSIBILITE D'APPLICATION INDUSTRIELLE

L'invention trouve son application industrielle dans la conception, la fabrication et l'utilisation de dispositifs d'optique adaptative.

## Revendications

1. Dispositif d'optique adaptative (1) comprenant au moins :
- une plaque primaire déformable (2), laquelle présente une surface optique (3) destinée à déformer un front d'onde incident par réfraction et/ou réflexion,
- une pluralité d'actionneurs primaires (4), conçus pour appliquer chacun une force respective sur ladite plaque primaire déformable (2) afin de déformer ladite surface optique (3),
- un bâti (6) fixe par rapport à ladite plaque primaire déformable (2), le dispositif d'optique adaptative (1) étant **caractérisé en ce qu'**il comprend en outre au moins :
- une plaque secondaire déformable (7), qui supporte les actionneurs primaires (4),
- un actionneur secondaire (8), relié au bâti (6), et conçu pour exercer sur ladite plaque secondaire déformable (7) une force selon une direction secondaire d'actionnement (S) pour la déformer, ladite direction secondaire d'actionnement (S) et ladite plaque secondaire (7) étant sécantes, **caractérisé en ce que** ladite plaque primaire déformable (2) présentant au moins une surface périphérique (11) s'étendant autour et/ou à côté de ladite surface optique (3), ledit dispositif d'optique adaptative (1) comprenant en outre au moins un actionneur externe (12), qui est relié au bâti (6) et conçu pour appliquer une force sur ladite surface périphérique (11) afin de déformer ladite plaque primaire déformable (2), l'actionneur externe (12) étant distinct de l'actionneur secondaire (8).

2. Dispositif d'optique adaptative (1) selon la revendication précédente, **caractérisé en ce que** ladite plaque primaire déformable (2) comprend au moins, à l'opposé de ladite surface optique (3), une face cachée (5), sur laquelle lesdits actionneurs primaires (4) exercent chacun leur force respective.

3. Dispositif d'optique adaptative (1) selon la revendication 1 ou 2, **caractérisé en ce que** la surface périphérique (11) comprend au moins une partie primaire mobile (15) reliée au moins audit actionneur externe (12) pour que ce dernier puisse la déformer, afin que ladite partie primaire mobile (15) transmette un effort de déformation à ladite surface optique (3), la surface périphérique (11) comprenant en outre au moins une partie primaire fixe (16) respective qui est attachée de manière fixe audit bâti (6) pour être immobilisée relativement à ce dernier.

4. Dispositif d'optique adaptative (1) selon l'une quelconque des revendications précédentes, **caractérisé en ce que** ledit actionneur externe (12) est amovible.

5. Dispositif d'optique adaptative (1) selon l'une quelconque des revendications précédentes, **caractérisé en ce que** la plaque primaire (2) est formée d'une première et d'une deuxième plaque (21, 22) distinctes mais solidarisées l'une à l'autre, ladite première plaque (21) formant au moins la surface optique (3) tandis que ladite deuxième plaque (22) forme au moins ladite surface périphérique (11).

6. Dispositif d'optique adaptative (1) selon la revendication précédente, **caractérisé en ce que** ladite deuxième plaque (22) est amovible, et est en particulier fixée de manière réversible à ladite première plaque (21).

7. Dispositif d'optique adaptative (1) selon l'une quelconque des revendications précédentes, **caractérisé en ce que** ledit actionneur secondaire (8) est amovible.

8. Dispositif d'optique adaptative (1) selon l'une quelconque des revendications précédentes, **caractérisé en ce que** lesdites plaques primaire et secondaire (2, 7) présentent des formes générales sensiblement similaires, et par exemples elles présentent des formes en étoile respectives avec les mêmes nombres de branches.

9. Procédé de fabrication d'un dispositif d'optique adaptative (1) comportant au moins :
- une étape primaire de réalisation ou de fourniture d'une plaque primaire déformable (2) présentant une surface optique (3) destinée à déformer un front d'onde incident par réfraction et/ou réflexion,
- une étape secondaire de réalisation ou de fourniture d'une plaque secondaire déformable (7),
- une étape de mise en place d'une pluralité d'actionneurs primaires (4), de manière à ce que, d'une part, lesdits actionneurs primaires (4) puissent appliquer chacun une force respective sur ladite plaque primaire déformable (2) afin de déformer ladite surface optique (3), et d'autre part, lesdits actionneurs primaires (4) soient supportés par ladite plaque secondaire (7),
- une étape de mise en place d'au moins un actionneur secondaire (8) pour que d'une part ledit actionneur secondaire (8) soit relié à un bâti (6), lequel est fixe par rapport à ladite plaque primaire déformable (2), et d'autre part ledit actionneur secondaire (8) puisse exercer sur ladite plaque secondaire déformable (7) une force selon une direction secondaire d'actionnement (S) pour la déformer, ladite direction secondaire d'actionnement (S) et ladite plaque secondaire (7) étant sécantes, **caractérisé en ce que** ladite plaque primaire déformable (2) présentant au moins une surface périphérique (11) s'étendant autour et/ou à côté de ladite surface optique (3), le procédé comprenant en outre une étape de mise en place d'au moins un actionneur externe (12), de manière à ce que, d'une part, il soit relié au bâti (6), et que d'autre part, il puisse appliquer une force sur ladite surface périphérique (11) afin de déformer ladite plaque primaire déformable (2), l'actionneur externe (12) étant distinct de l'actionneur secondaire (8).

10. Procédé de fabrication d'un dispositif d'optique adaptative (1) selon la revendication précédente, **caractérisé en ce qu'**il comprend en outre au moins les étapes successives suivantes :
- une étape de modification de la courbure de ladite plaque secondaire (7) en exerçant au moyen de l'actionneur secondaire (8) une force sur ladite plaque secondaire (7), de sorte à impartir à cette dernière une configuration à courbure modifiée,
- une étape de fixation secondaire, alors que ladite plaque secondaire (7) se trouve en configuration à courbure modifiée, de ladite plaque secondaire (7) et/ou d'un bord de ladite plaque primaire (2), par exemple à l'aide de colle ou de vis, sur le bâti (6),
- une étape de désolidarisation de l'actionneur secondaire (8) et du bâti (6).

11. Procédé de fabrication d'un dispositif d'optique adaptative (1) selon la revendication précédente, **caractérisé en ce qu'**il comprend au moins les étapes successives suivantes :
- une étape de modification de la courbure de ladite plaque primaire (2) en exerçant au moyen de l'actionneur externe (12) une force sur ladite plaque primaire (2), de sorte à impartir à cette dernière une configuration à courbure modifiée,
- une étape de fixation primaire, alors que ladite plaque primaire (2) se trouve en configuration à courbure modifiée, d'une portion d'attache de ladite plaque primaire (2), par exemple à l'aide de colle ou de vis, sur le bâti (6).

12. Procédé de fabrication d'un dispositif d'optique adaptative (1) selon la revendication précédente, **caractérisé en ce qu'**il comprend une étape de désolidarisation de l'actionneur externe (12) et du bâti (6).

13. Procédé de fabrication d'un dispositif d'optique adaptative (1) selon l'une des revendications 10 à 12, **caractérisé en ce qu'**il comprend une étape de solidarisation d'une première et d'une deuxième plaque (21, 22) distinctes afin de former ladite plaque primaire (2), ladite première plaque (21) formant au moins la surface optique (3) tandis que ladite deuxième plaque (22) forme au moins ladite surface périphérique (11).

14. Procédé de fabrication d'un dispositif d'optique adaptative (1) selon au moins les revendications 11 et 13, **caractérisé en ce que** lors de ladite étape de fixation primaire, ladite portion d'attache est formée soit par une partie de ladite deuxième plaque (22), par exemple une partie secondaire fixe (18) de la surface périphérique (11), soit par un bord de ladite première plaque (21).

15. Procédé de fabrication d'un dispositif d'optique adaptative (1) selon la revendication 13 ou 14, **caractérisé en ce qu'**il comprend en outre une étape de désolidarisation desdites première et deuxième plaques (21, 22).

## Patentansprüche

1. Adaptive optische Vorrichtung (1), die mindestens Folgendes umfasst:
- eine verformbare Primärplatte (2), die eine optische Oberfläche (3) besitzt, die dazu bestimmt ist, eine einfallende Wellenfront durch Brechung und/oder Reflexion zu verformen,
- eine Vielzahl von Primäraktuatoren (4), die so ausgelegt sind, dass sie eine jeweilige Kraft auf die verformbare Primärplatte (2) ausüben, um die optische Oberfläche (3) zu verformen,
- ein Gestell (6), das in Bezug auf die verformbare Primärplatte (2) feststehend ist, wobei die adaptive optische Vorrichtung (1) **dadurch gekennzeichnet ist, dass** sie ferner mindestens Folgendes umfasst:
- eine verformbare Sekundärplatte (7), die die Primäraktuatoren (4) trägt,
- einen Sekundäraktuator (8), der mit dem Gestell (6) verbunden und so ausgelegt ist, dass er auf die verformbare Sekundärplatte (7) eine Kraft in einer sekundären Betätigungsrichtung (S) ausübt, um sie zu verformen, wobei die sekundäre Betätigungsrichtung (S) und die Sekundärplatte (7) sich schneiden, **dadurch gekennzeichnet, dass** die verformbare Primärplatte (2) mindestens eine Umfangsfläche (11) besitzt, die sich um und/oder neben der optischen Oberfläche (3) erstreckt, wobei die adaptive optische Vorrichtung (1) ferner mindestens einen externen Aktuator (12) umfasst, der mit dem Gestell (6) verbunden und so ausgelegt ist, dass er eine Kraft auf die Umfangsfläche (11) ausübt, um die verformbare Primärplatte (2) zu verformen, wobei der externe Aktuator (12) von dem sekundären Aktuator (8) getrennt ist.

2. Adaptive optische Vorrichtung (1) nach dem vorhergehenden Anspruch, **dadurch gekennzeichnet, dass** die verformbare Primärplatte (2) gegenüber der optischen Oberfläche (3) mindestens eine verdeckte Seite (5) umfasst, auf die die Primäraktuatoren (4) jeweils ihre jeweilige Kraft ausüben.

3. Adaptive optische Vorrichtung (1) nach Anspruch 1 oder 2, **dadurch gekennzeichnet, dass** die Umfangsfläche (11) mindestens einen beweglichen Primärteil (15) umfasst, der mindestens mit dem externen Aktuator (12) verbunden ist, damit dieser ihn verformen kann, so dass der bewegliche Primärteil (15) eine Verformungskraft auf die optische Oberfläche (3) überträgt, wobei die Umfangsfläche (11) ferner mindestens einen jeweiligen feststehenden Primärteil (16) umfasst, der fest mit dem Gestell (6) verbunden ist, um in Bezug auf dieses unbeweglich zu sein.

4. Adaptive optische Vorrichtung (1) nach einem der vorhergehenden Ansprüche, **dadurch gekennzeichnet, dass** der externe Aktuator (12) abnehmbar ist.

5. Adaptive optische Vorrichtung (1) nach einem der vorhergehenden Ansprüche, **dadurch gekennzeichnet, dass** die Primärplatte (2) aus einer ersten und einer zweiten Platte (21, 22) gebildet ist, die voneinander getrennt, aber miteinander verbunden sind, wobei die erste Platte (21) mindestens die optische Oberfläche (3) bildet, während die zweite Platte (22) mindestens die Umfangsfläche (11) bildet.

6. Adaptive optische Vorrichtung (1) nach dem vorhergehenden Anspruch, **dadurch gekennzeichnet, dass** die zweite Platte (22) abnehmbar ist und insbesondere reversibel an der ersten Platte (21) befestigt ist.

7. Adaptive optische Vorrichtung (1) nach einem der vorhergehenden Ansprüche, **dadurch gekennzeichnet, dass** der Sekundäraktuator (8) abnehmbar ist.

8. Adaptive optische Vorrichtung (1) nach einem der vorhergehenden Ansprüche, **dadurch gekennzeichnet, dass** die Primär- und die Sekundärplatte (2, 7) im Wesentlichen ähnliche allgemeine Formen besitzen und sie beispielsweise jeweils Sternformen mit derselben Anzahl von Armen besitzen.

9. Verfahren zur Fertigung einer adaptiven optischen Vorrichtung (1), das mindestens Folgendes aufweist:
- einen primären Schritt des Herstellens oder Bereitstellens einer verformbaren Primärplatte (2), die eine optische Oberfläche (3) besitzt, die dazu bestimmt ist, eine einfallende Wellenfront durch Brechung und/oder Reflexion zu verformen,
- einen sekundären Schritt des Herstellens oder Bereitstellens einer verformbaren Sekundärplatte (7),
- einen Schritt des Anbringens einer Vielzahl von Primäraktuatoren (4), so dass einerseits die Primäraktuatoren (4) jeweils eine jeweilige Kraft auf die verformbare Primärplatte (2) ausüben können, um die optische Oberfläche (3) zu verformen, und andererseits die Primäraktuatoren (4) von der Sekundärplatte (7) getragen werden,
- einen Schritt des Anbringens mindestens eines Sekundäraktuators (8), damit einerseits der Sekundäraktuator (8) mit einem Gestell (6) verbunden ist, das in Bezug auf die verformbare Primärplatte (2) feststehend ist, und andererseits der Sekundäraktuator (8) eine Kraft gemäß einer sekundären Betätigungsrichtung (S) auf die verformbare Sekundärplatte (7) ausüben kann, um sie zu verformen, wobei die sekundäre Betätigungsrichtung (S) und die Sekundärplatte (7) sich schneiden, **dadurch gekennzeichnet, dass** die verformbare Primärplatte (2) mindestens eine Umfangsfläche (11) besitzt, die sich um und/oder neben der optischen Oberfläche (3) erstreckt, wobei das Verfahren ferner einen Schritt des Anbringens mindestens eines externen Aktuators (12) umfasst, so dass er einerseits mit dem Gestell (6) verbunden ist und andererseits eine Kraft auf die Umfangsfläche (11) ausüben kann, um die verformbare Primärplatte (2) zu verformen, wobei der externe Aktuator (12) getrennt von dem Sekundäraktuator (8) ist.

10. Verfahren zur Fertigung einer adaptiven optischen Vorrichtung (1) nach dem vorhergehenden Anspruch, **dadurch gekennzeichnet, dass** es ferner mindestens die folgenden aufeinanderfolgenden Schritte umfasst:
- einen Schritt des Änderns der Krümmung der Sekundärplatte (7), indem mittels des Sekundäraktuators (8) eine Kraft auf die Sekundärplatte (7) ausgeübt wird, um dieser eine Konfiguration mit geänderter Krümmung zu verleihen,
- einen Schritt des sekundären Befestigens, während sich die Sekundärplatte (7) in einer Konfiguration mit geänderter Krümmung befindet, der Sekundärplatte (7) und/oder einer Kante der Primärplatte (2), beispielsweise mithilfe von Klebstoff oder Schrauben, an dem Gestell (6),
- einen Schritt des Trennens des Sekundäraktuators (8) und des Gestells (6).

11. Verfahren zur Fertigung einer adaptiven optischen Vorrichtung (1) nach dem vorhergehenden Anspruch, **dadurch gekennzeichnet, dass** es mindestens die folgenden aufeinanderfolgenden Schritte umfasst:
- einen Schritt des Änderns der Krümmung der Primärplatte (2), indem mittels des externen Aktuators (12) eine Kraft auf die Primärplatte (2) ausgeübt wird, um dieser eine Konfiguration mit geänderter Krümmung zu verleihen,
- einen Schritt des primären Befestigens, während sich die Primärplatte (2) in einer Konfiguration mit geänderter Krümmung befindet, eines Befestigungsabschnitts der Primärplatte (2), beispielsweise mithilfe von Klebstoff oder Schrauben, an dem Gestell (6).

12. Verfahren zur Fertigung einer adaptiven optischen Vorrichtung (1) nach dem vorhergehenden Anspruch, **dadurch gekennzeichnet, dass** es einen Schritt des Trennens des externen Aktuators (12) und des Gestells (6) umfasst.

13. Verfahren zur Fertigung einer adaptiven optischen Vorrichtung (1) nach einem der Ansprüche 10 bis 12, **dadurch gekennzeichnet, dass** es einen Schritt des Verbindens einer ersten und einer zweiten Platte (21, 22), die voneinander getrennt sind, umfasst, um die Primärplatte (2) zu bilden, wobei die erste Platte (21) mindestens die optische Oberfläche (3) bildet, während die zweite Platte (22) mindestens die Umfangsfläche (11) bildet.

14. Verfahren zur Fertigung einer adaptiven optischen Vorrichtung (1) nach mindestens den Ansprüchen 11 und 13, **dadurch gekennzeichnet, dass** bei dem primären Schritt des primären Befestigens der Befestigungsabschnitt entweder durch einen Teil der zweiten Platte (22), beispielsweise einen feststehenden Sekundärteil (18) der Umfangsfläche (11), oder durch eine Kante der ersten Platte (21) gebildet wird.

15. Verfahren zur Fertigung einer adaptiven optischen Vorrichtung (1) nach Anspruch 13 oder 14, **dadurch gekennzeichnet, dass** es ferner einen Schritt des Trennens der ersten und der zweiten Platte (21, 22) umfasst.

## Claims

1. Adaptive optical device (1) comprising at least:
- a deformable primary plate (2), which has an optical surface (3) designed to deform an incident wavefront through refraction and/or reflection,
- a plurality of primary actuators (4), each designed to apply a respective force to said deformable primary plate (2) in order to deform said optical surface (3),
- a frame (6) fixed in relation to said deformable primary plate (2), the adaptive optical device (1) being **characterised in that** it further comprises at least:
- a deformable secondary plate (7), which supports the primary actuators (4),
- a secondary actuator (8), connected to the frame (6), and designed to exert a force on said deformable secondary plate (7) in a secondary actuation direction (S) to deform it, said secondary actuation direction (S) and said secondary plate (7) being secant, **characterised in that** said deformable primary plate (2) has at least one peripheral surface (11) extending around and/or next to said optical surface (3), said adaptive optical device (1) further comprising at least one external actuator (12), which is connected to the frame (6) and designed to apply a force to said peripheral surface (11) in order to deform said deformable primary plate (2), the external actuator (12) being distinct from the secondary actuator (8).

2. Adaptive optical device (1) according to the preceding claim, **characterised in that** said deformable primary plate (2) comprises at least, opposite to said optical surface (3), a concealed face (5), on which said primary actuators (4) each exert their respective force.

3. Adaptive optical device (1) according to claim 1 or 2, **characterised in that** the peripheral surface (11) comprises at least one movable primary part (15) connected to at least one external actuator (12) so that the latter can deform it, so that said movable primary part (15) transmits a deformation force to said optical surface (3), the peripheral surface (11) furthermore comprising at least one respective fixed primary part (16) which is fixedly attached to said frame (6) to be immobilised in relation to the latter.

4. Adaptive optical device (1) according to any of the preceding claims, **characterised in that** said external actuator (12) is removable.

5. Adaptive optical device (1) according to any one of the preceding claims, **characterised in that** the primary plate (2) is composed of a first and a second plate (21, 22) that are distinct yet bonded together, said first plate (21) forming at least the optical surface (3) while said second plate (22) forms at least said peripheral surface (11).

6. Adaptive optical device (1) according to the preceding claim, **characterised in that** said second plate (22) is removable and is, in particular, reversibly attached to said first plate (21).

7. Adaptive optical device (1) according to any of the preceding claims, **characterised in that** said secondary actuator (8) is removable.

8. Adaptive optical device (1) according to any one of the preceding claims, **characterised in that** the primary and secondary plates (2, 7) have substantially similar overall shapes, and for example they have respective star shapes with the same number of arms.

9. Method for manufacturing an adaptive optical device (1) including at least:
- a primary step of producing or providing a deformable primary plate (2) having an optical surface (3) designed to deform an incident wavefront through refraction and/or reflection,
- a secondary stage of producing or providing a deformable secondary plate (7),
- a step of installing a plurality of primary actuators (4), so that, on the one hand, said primary actuators (4) can each exert a respective force on said deformable primary plate (2) in order to deform said optical surface (3), and , on the other hand, said primary actuators (4) are supported by said secondary plate (7),
- a step of installing at least one secondary actuator (8) so that, on the one hand, said secondary actuator (8) is connected to a frame (6), which is fixed relative to said deformable primary plate (2), and, on the other hand, said secondary actuator (8) can exert a force on said deformable secondary plate (7) in a secondary actuation direction (S) to deform it, said secondary actuation direction (S) and said secondary plate (7) being secant, **characterised in that** said deformable primary plate (2) has at least one peripheral surface (11) extending around and/or next to said optical surface (3), the method further comprising a step of placing at least one external actuator (12), so that, on the one hand, it is connected to the frame (6), and on the other hand, it can apply a force to said peripheral surface (11) in order to deform said deformable primary plate (2), the external actuator (12) being distinct from the secondary actuator (8).

10. Method for manufacturing an adaptive optical device (1) according to the preceding claim, **characterised in that** it further comprises at least the following successive steps:
- a step of modifying the curvature of said secondary plate (7) by exerting, by means of the secondary actuator (8), a force on said secondary plate (7), so as to impart to the latter a configuration with modified curvature,
- a step of secondary fastening, while said secondary plate (7) is in a configuration with modified curvature, of said secondary plate (7) and/or an edge of said primary plate (2), for example using glue or screws, to the frame (6),
- a step of disconnecting the secondary actuator (8) from the frame (6).

11. Method for manufacturing an adaptive optical device (1) according to the preceding claim, **characterised in that** it comprises at least the following successive steps:
- a step of modifying the curvature of said primary plate (2) by applying a force to said primary plate (2), via the external actuator (12), so as to impart to the latter a configuration with modified curvature,
- a step of primary fastening, while said primary plate (2) is in a configuration with modified curvature, a portion of said primary plate (2) for attachment, for example using glue or screws, to the frame (6).

12. Method for manufacturing an adaptive optical device (1) according to the preceding claim, **characterised in that** it comprises a step of disconnecting the external actuator (12) from the frame (6).

13. Method for manufacturing an adaptive optical device (1) according to one of claims 10 to 12, **characterised in that** it comprises a step of bonding a separate first and second plate (21, 22) to form the primary plate (2), said first plate (21) forming at least the optical surface (3) while said second plate (22) forms at least said peripheral surface (11).

14. Method for manufacturing an adaptive optical device (1) according to at least claims 11 and 13, **characterised in that**, during said primary attachment step, said attachment portion is formed either by a part of said second plate (22), for example a fixed secondary part (18) of the peripheral surface (11), or by an edge of said first plate (21).

15. Method for manufacturing an adaptive optical device (1) according to claim 13 or 14, **characterised in that** it furthermore comprises a step of separating the first and second plates (21, 22).
